Europäisches Patentamt

European Patent Office

Office européen des brevets

(11) Veröffentlichungsnummer: **0 038 932**
B1

(12) **EUROPÄISCHE PATENTSCHRIFT**

(45) Veröffentlichungstag der Patentschrift: 28.12.83

(21) Anmeldenummer: 81102103.9

(22) Anmeldetag: 20.03.81

(51) Int. Cl.³: **B 27 K 3/50, C 09 D 5/14**

(54) Wässrige Holzschutzmittel.

(30) Priorität: 14.04.80 DE 3014194

(43) Veröffentlichungstag der Anmeldung:
04.11.81 Patentblatt 81/44

(45) Bekanntmachung des Hinweises auf die Patenterteilung:
28.12.83 Patentblatt 83/52

(84) Benannte Vertragsstaaten:
AT BE CH DE FR GB IT LI NL SE

(56) Entgegenhaltungen:
FR - A - 2 392 787

(73) Patentinhaber: Dr. Wolman GmbH
Dr.-Wolman-Strasse 31-33
D-7573 Sinzheim (DE)

(72) Erfinder: Marx, Hans-Norbert
Mozartweg 8
D-7580 Buehl-Weitenung (DE)

(74) Vertreter: Schweiss, Werner, Dr.
BASF Aktiengesellschaft Patentabteilung Carl-
Bosch-Strasse 38
D-6700 Ludwigshafen (DE)

Die Akte enthält technische Angaben, die nach dem Eingang der Anmeldung eingereicht wurden und die nicht in dieser Patentschrift enthalten sind.

Courier Press, Leamington Spa, England.

### Wäßriges Holzschutzmittel

Die vorliegende Erfindung betrifft ein wäßriges Holzschutzmittel, das ein Alkydharz und einem fungiziden oder insektiziden Wirkstoff in wäßriger Lösung enthält.

Es ist bekannt, das 2,5-Dimethylfuran-3-carbonsäure-N-methyloxy-N-cyclohexylamid als Fungizid zu verwenden (DE—A 24 55 082). Es ist ferner bekannt wasserlösliche Alkydharze, insbesondere neutralisierte Alkydharze, in wäßriger Lösung als Wasserlacke zu verwenden (Römpp Chemie-Lexikon, 7. Auflage, Band 1, Seiten 120, 121 und Band 6, Seite 3884).

Es ist ferner bekannt Tributylzinnbenzoat, Tributylzinnnaphtenat, Gamma-Hexachlorcyclohexan, Pentachlorphenol-Laurat, Dioxy-N-cyclohexyldiazenium-Kaliumsalz, 2-Mercaptobenzthiazol-Natriumsalz, 8-Hydroxychinolin-Natriumsalz, 2-Methoxycarbonylamino-benzimidazol als fungizide oder insektizide Wirkstoffe zu verwenden.

Es wurde nun gefunden, daß eine wäßrige Lösung von einem Alkydharz und einem fungizid oder insektizid wirksamen Stoff nämlich 2,5-Dimethylfuran-3-carbonsäure-N-methoxy-N-cyclohexylamid, Tributylzinnbenzoat, Tributylzinnnaphtenat, Gamma-Hexachlorcyclohexan, Pentachlorphenol-Laurat, 2-Methoxycarbonylamino-benzimidazol oder eine Mischung der Wirkstoffe also Holzschutzmittel geeignet ist. Es ist überraschend, daß die oben genannten Verbindungen, soweit sie wasserunlöslich sind, zusammen mit einem Alkydharz in Wasser löslich sind und in dieser Lösung ihre bekannten guten fungiziden oder insektiziden Wirkungen beibehalten. Die neuen Holzschutzmittel enthalten beispielsweise, berechnet auf die fertige Mischung, 0,5 bis 5 Gewichtsprozent, insbesondere 1 bis 4 Gewichtsprozent an Wirkstoff und 5 bis 40 Gewichtsprozent, insbesondere 10 bis 30 Gewichtsprozent Alkydharz in wäßriger Lösung. Als Alkydharz wird ein neutralisiertes Alkydharz bevorzugt, das in Wasser löslich ist. Die Neutralisation kann mit Alkali, z.B. Natriumhydroxid oder Kaliumhydroxid oder Ammoniak in wäßriger Lösung vorgenommen werden. Als Wirkstoff wird 2,5-Dimethylfuran-3-carbonsäure-N-methoxy-N-cyclohexylamid bevorzugt.

Zur Verbesserung der Wirkung können die neuen Holzschutzmittel auch Mischungen mit anderen bekannten Wirkstoffen z.B. auch Mischungen mit N-Cyclohexyl-N-hydroxydiazeniumoxid-Kaliumsalz, 2-Mercaptobenzthiazol-Natriumsalz, 8-Hydroxychinolin-Natriumsalz, Carbamaten oder Phosphorsäureestern enthalten.

Die neuen Holzschutzmittel können auch noch oberflächenaktive Substanzen z. B. Alkylenoxidadditionsprodukte, beispielsweise Äthylenoxid- oder Propylenoxidadditionsprodukte, insbesondere an Alkyl-Phenole, beispielsweise in Mengen von 0,1 bis 5 Gewichtsprozent, insbesondere 0,5 bis 3 Gewichtsprozent Alkylenoxidadditionsprodukt enthalten. Das Additionsprodukt von 8 bis 11 Mol Äthylenoxid an Nonylphenol wird bevorzugt.

Die neuen Holzschutzmittel können auch noch bekannte Trockenstoffe (Sikkative) (Römpp Chemie-Lexikon, 7. Auflage, Band 6, Seite 3692, 3693) beispielsweise in Mengen von 0,5 bis 3 Gewichtsprozent, insbesondere 1 bis 2 Gewichtsprozent enthalten. Eine Mischung der Oktoate von Kobalt, Mangan und Blei wird bevorzugt.

Die neuen Holzschutzmittel können auch noch bekannte feinteilige Pigmente (Römpp Chemie-Lexikon, 7. Auflage, Band 4, Seiten 2693, 2694, 2695) z.B. organische oder anorganische Pigmente, beispielsweise in Mengen von 1 bis 10 Gewichtsprozent, insbesondere 2 bis 5 Gewichtsprozent enthalten. Die neuen Holzschutzmittel können auch noch organische Flüssigkeiten, z. B. Kohlenwasserstoffe oder Glykole beispielsweise in Mengen von 3—10 Gewichtsprozent, insbesondere 6 bis 8 Gewichtsprozent enthalten. Bevorzugt werden eine Benzinfraktion mit Siedepunkt 180 bis 220°C und Butylglykol.

Es ist bekannt, zur Herstellung von Holzanstrichmitteln wäßrige Kunststoff-Dispersionen zu verwenden (DE—B 16 42 171). Derartige Dispersionen zeichnen sich im allgemeinen durch eine schnelle Trocknung und hohe Witterungsbeständigkeit aus.

Weiterhin ist es bekannt, für Holzanstrichmittel wasserverdünnbare Kunstharze, insbesondere neutralisierbare, und damit wasserlösliche Alkydharze zu verwenden. Auch bei diesen Mitteln stehen schnelle Trocknung und hohe Belastbarkeit durch die Witterung im Vordergrund. Gemeinsam ist den genannten Mitteln der Vorteil, daß sie keine oder nur wenig organische Lösungsmittel enthalten und damit im besonderen Maße den ökologischen Forderungen nach geringen Lösungsmittelbelastungen der Umwelt Rechnung tragen, und daß sie nicht brennen.

Für den Holzschutz im eigentlichen Sinne konnten diese Mittel bislang nur wenig verwendet werden, da sich die meisten der im Holzschutz verwendeten Wirkstoffe in Wasser nicht lösen und somit größere Mengen an Hilfslösemitteln notwendig wären, um sie in Wasser zu lösen. Damit gehen aber die oben geschilderten Vorteile der wäßrigen Mittel verloren.

Bei der Herstellung der erfindungsgemäßen Holzschutzmittel ist es z. B. möglich, eine 10%ige (Gew.%) wäßrige Lösung des Alkydharzes, neutralisiert mit Natronlauge, Kalilauge, Ammoniak oder organischen Aminen ohne weitere Lösungsmittel mit 2,5-Dimethylfuran-3-carbonsäure-N-methoxy-N-cyclohexylamid in 100%iger Form oder in Form einer 50%igen Lösung in einer Benzinfraktion zu versetzen. Dabei entstehen vollkommen homogene, klare bis leicht trübe Mischungen. Selbst bei langer Aufbewahrungszeit verändern sich derartige Mischungen nicht, d.h. der Wirkstoff scheidet sich aus dieser Mischung nicht ab.

**0 038 932**

Überraschenderweise können auch weitere bekannte, an sich wasserunlösliche biologisch wirksame Substanzen in dieser Weise im Wasser gelöst werden.

Auch viele andere, im Holzschutz verwendbare bekannte Wirkstoffe aus der Reihe der Insektizide sowie der Fungizide mit Wirkung gegen holzzerstörende oder holzverfärbende Pilze können in dem erfindungsgemäßen Holzschutzmittel mit verwendet werden.

Das neue Holzschutzmittel dringt bei der Anwendung gleichmäßig in das Holz ein. Man vermeidet so die Nachteile von zweiphasigen Systemen (Dispersionssystem) und die Verwendung von zusätzlichen organischen Losungsmitteln.

Weiterhin ist von Bedeutung, daß die neuen Holzschutzmittel unbrennbar und sehr geruchsarm sind. Je nach Konzentration des Alkydharzes im Holzschutzmittel erhält man bei steigender Konzentration Imprägniergrundierungen, offenporige Holzschutzlasuren und Dickschichtlasuren.

Es ist auch möglich, Pigmente oder Pigmentpräparationen in den Holzschutzmitteln zu dispergieren, so daß neben den holzschützenden Eigenschaften auch eine dekorative Wirkung bei der Holzbehandlung erreicht wird.

Die Alkykdharze sind normalerweise in organischen Lösungsmitteln gelöst. Sie können in lösungsmittelfreier Form oder in Form ihrer Lösung verwendet werden.

Je nach Lieferform der verwendeten wasserlöslichen Alkydharze liegt dann der Gesamtlösungsmittelgehalt des Holzschutzmittels bei 3—10% (im allgemeinen Glykolderivate).

Für die versuche wurde ein Alkydharz verwendet, das z.B. aus Phthalsäure oder Phthalsäureanhydrid, Glycerin und gesättigten Fettsäuren z.B. Palmitinsäure, Stearinsäure hergestellt worden ist.

Die folgenden Rezepturbeispiele erläutern die Zussamensetzung der erfindungsgemäßen Holzschutzmittel

1) Holzschutzgrundierung farblos mit vorbeugendem Schutz gegen holzzerstörende Pilze und Insekten

   7% Alkydharz, wasserverdünnbar, neutralisiert
   1,5—3% 2,5-Dimethylfuran-3-carbonsäure-N-methoxy-N-cyclohexylamid
   0,50% Gamma-Hexachlorcyclohexan
   2,00% Nonylphenol + 8 bis 11 Mol Äthylenoxid
   84,50—81,50% Wasser
   3% Butylglykol
   1,5—3% Benzinfraktion 80 bis 220°C

2) Holzschutzlasur pigmentiert mit vorbeugendem Schutz gegen holzzerstörende Pilze und Insekten

   20% Alkydharz, wasserverdünnbar, neutralisiert
   1—2% 2,5-Dimethylfuran-3-carbonsäure-N-methoxy-N-cyclohexylamid
   0,50% Gamma-Hexachlorcyclohexan
   1,00% Nonylphenol + 8 bis 11 Mol Äthylenoxid
   2,00—5,00% Pigment oder Pigmentpräparation
   1,00—2,00% Octoat von Kobalt, Mangan, Blei
   68,50—62,50% Wasser
   1—2% Benzinfraktion 80 bis 220°C
   5% Butylglykol

3) Dickschichtlasur mit vorbeugendem Schutz gegen holzzerstörende Pilze und Insekten

   28% Alkydharz, wasserverdünnbar, neutralisiert
   1—2% 2,5-Dimethylfuran-3-carbonsäure-N-methoxy-N-cyclohexylamid
   0,50% Gamma-Hexachlorcyclohexan
   1,00% Nonylphenol + 8 bis 11 Mol Äthylenoxid
   2,00—5,00% Pigment oder Pigmentpräparation
   2,00% Octoat von Co, Mn, Pb
   52,50—47,50% Wasser
   12% Butylglykol
   1—2% Benzinfraktion 80 bis 220°C

4) 7,0% Alkydharz, wasserverdünnbar, neutralisiert
   0,5—1,5% Tributylzinnbenzoat
   0,5% Gamma-Hexachlorcyclohexan
   2,0% Nonylphenol + 8 bis 11 Mol Äthylenoxid
   85,50—83% Wasser
   3,0% Butylglykol
   1,5—3,0% Benzinfraktion 80 bis 220°C

5) 20,0% Alkydharz, wasserverdünnbar, neutralisiert.
   0,5—1,5% Tributylzinnaphtenat
   0,5% Gamma-Hexachlorcyclohexan

1,0% Nonylphenol + 8 bis 11 Mol Äthylenoxid
2,0 5,0% Pigment oder Pigmentpräparation
1,0—2,0% Octoat von Kobalt, Mangan und Blei
69,0—63,0% Wasser
10—2,0% Benzinfraktion 80 bis 220°C
5,0% Butylglykol
6) 28,0% Alkydharz, wasserverdünnbar, neutralisiert
1,5—4,0% Pentachlorphenol-Laurat
0,5% Gamma-Hexachlorcyclohexan
1,0% Nonylphenol + 8 bis 11 Mol Äthylenoxid
2,0 5,0% Pigment oder Pigmentpräparation
2,0% Octoat von Kobalt, Mangan und Blei
52,0—45,5% Wasser
12,0% Butylglykol
1,0—2,0% Benzinfraktion 80 bis 220°C
7) 7,0% Alkydharz, wasserverdünnbar, neutralisiert
1,5—3,0% N-Cyclohexyl-N-hydroxydiazeniumoxid, Kaliumsalz
0,50% Gamma-Hexachlorcyclohexan
2,0% Nonylphenol + 8 bis 11 Mol Äthylenoxid
84,5—81,5% Wasser
3,0% Butylglykol
1,5—3,0% Benzinfraktion 80 bis 220°C
8) 7,0% Alkydharz, wasserverdünnbar, neutralisiert
0,75—1,5% 2,5-Dimethylfuran-3-carbonsäure-N-methoxy-N-cyclohexylamid
0,5—1,0% 2-Mercaptobenzthiazol, Na-Salz
0,5% Gamma-Hexachlorcyclohexan
2,0% Nonylphenol + 8 bis 11 Mol Äthylenoxid
84,75—82,0% Wasser
3,0% Butylglykol
1,5—3,0% Benzinfraktion 80 bis 220°C
9) 7,0% Alkydharz, wasserverdünnbar, neutralisiert
0,75—1,5% 2,5-Dimethylfuran-3-carbonsäure-N-methoxy-N-cyclohexylamid
0,5—1,0% 8-Hydroxychinolin, Na-Salz
0,5% Gamma-Hexachlorcyclohexan
2,0% Nonylphenol + 8 bis 11 Mol Äthylenoxid
84,75—82,0% Wasser
3,0% Butylglykol
1,5—3,0% Benzinfraktion 80 bis 220°C
10) 7,0% Alkydharz, wasserverdünnbar, neutralisiert
0,75 — 3,0% 2,5-Dimethylfuran-3-carbonsäure-N-methoxy-N-cyclohexylamid
0,5% 2-(Methoxy-carbonylamino)-benzimidazol
0,5% Gamma-Hexachlorcyclohexan
2,0% Nonylphenol + 8 bis 11 Mol Äthylenoxid
84,75—81,5% Wasser
3,0% Butylglykol
1,5—3,0% Benzinfraktion 80 bis 220°C.

Die erfindungsgemäßen Holzschutzmittel werden in üblicher Weise, beispielsweise durch Streichen, Tauchen oder Besprühen des Holzes angewendet. Sie schützen das mit ihnen behandelte Holz zuverlässig gegen Zerstörung oder Verfärbung durch Pilze oder Insekten. Die im Einzelfall anzuwendenden Mengen an Holzschutzmittel richten sich nach ihrem Wirkstoffgehalt und sind so auszuwählen, daß die auf das Holz einwirkende Menge an Holzschutzmittel die Menge an Wirkstoff enthält, die der üblichen Anwendungsmenge des Wirkstoffs entspricht.

## Patentansprüche

1. Holzschutzmittel, enthaltend eine wäßrige Lösung von einem Alkydharz und einem fungizid oder insektizid wirksamen Stoff nämlich 2,5-Dimethylfuran-3-carbonsäure-N-methoxy-N-cyclohexylamid, Tributylzinnbenzoat, Tributylzinnnaphtenat, Gamma-Hexachlorcyclohexan, Pentachlorphenol-Laurat, 2-Methoxycarbonyl-amino-benzimidazol oder eine Mischung der Wirkstoffe.

2. Holzschutzmittel nach Anspruch 1, dadurch gekennzeichnet, daß es als Alkydharz ein neutralisiertes Alkydharz enthält.

3. Holzschutzmittel nach Anspruch 1, dadurch gekennzeichnet, daß es 2,5-Dimethylfuran-3-carbonsäure-N-methoxy-N-cyclohexylamid enthält.

4. Holzschutzmittel nach Anspruch 1, dadurch gekennzeichnet, daß es ein Alkylenoxidadditionsprodukt eines Alkyl-Phenols enthält.

5. Verfahren zur Herstellung eines Holzschutzmittels, dadurch gekennzeichnet, daß man Wasser, ein Alkydharz und einen fungizid oder insektizid wirksamen Stoff nämlich 2,5-Dimethylfuran-3-carbonsäure-N-methoxy-N-cyclohexylamid, Tributylzinnbenzoat, Tributylzinnnaphtenat, Gamma-Hexachlorcyclohexan, Pentachlorphenol-Laurat, 2-Methoxycarbonylamino-benzimidazol oder eine Mischung der Wirkstoffe miteinander mischt.

6. Verfahren zum Schutz von Holz gegen Pilzbefall oder Insektenbefall, dadurch gekennzeichnet, daß man das Holz behandelt mit einer wäßrigen Lösung, enthaltend ein Alkydharz und einem fungizid oder insektizid wirksamen Stoff nämlich 2,5-Dimethylfuran-3-carbonsäure-N-methoxy-N-cyclohexyl-amid, Tributylzinnbenzoat, Tributylzinnnaphtenat, Gamma-Hexachlorcyclohexan, Pentachlorphenol-Laurat, 2-Methoxycarbonylamino-benzimidazol oder einer Mischung der Wirkstoffe.

## Claims

1. A wood preservative comprising an aqueous solution of an alkyd resin and a fungicidal or insecticidal active ingredient, namely 2,5-dimethylfuran-3-carboxylic acid N-methoxy-N-cyclohexylamide, tributyl-tin benzoate, tributyl-tin naphthenate, gamma-hexachlorocyclohexane, pentachlorophenol laurate, 2-methoxycarbonylamino-benzimidazole, or a mixture of these active ingredients.

2. A wood preservative as claimed in claim 1, which contains a neutralized alkyd resin as the alkyd resin.

3. A wood preservative as claimed in claim 1, which contains 2,5-dimethylfuran-3-carboxylic acid N-methoxy-N-cyclohexylamide.

4. A wood preservative as claimed in claim 1, which contains an alkylphenol/alkylene oxide adduct.

5. A process for the production of a wood preservative, wherein water, an alkyd resin and a fungicidal or insecticidal active ingredient, namely 2,5-dimethylfuran-3-carboxylic acid N-methoxy-N-cyclohexylamide, tributyl-tin benzoate, tributyl-tin naphthenate, gamma hexachlorocyclohexane, pentachlorophenol laurate, 2-methoxycarbonylamino-benzimidazole, or a mixture of these active ingredients, are mixed together.

6. A process for protecting wood against attack by fungi or insects, wherein the wood is treated with an aqueous solution containing an alkyd resin and a fungicidal or insecticidal active ingredient, namely 2,5-dimethylfuran-3-carboxylic acid N-methoxy-N-cyclohexylamide, tributyl-tin benzoate, tributyl-tin naphthenate, gamma-hexachlorocyclohexane, pentachlorophenol laurate, 2-methoxycarbonylamino-benzimidazole, or a mixture of these active ingredients.

## Revendications

1. Agent protecteur du bois, contenant une solution aqueuse d'une résine alkyd et d'une substance douée d'activité fongicide ou insecticide, à savoir le 2,5-diméthylfuranne-3-carboxy-N-méthoxy-N-cyclohexylamide, le benzoate de tributylétain, le naphténate de tributylétain, le gamma-hexachlorocyclohexane, le laurate de pentachloro-phénol, le 2-méthoxycarbonylamino-benzimidazole, ou un mélange de ces substances actives.

2. Agent protecteur du bois suivant la revendication 1, caractérisé en ce qu'il contient une résine alkyd neutralisée à titre de résine alkyd.

3. Agent protecteur du bois suivant la revendication 1, caractérisé en ce qu'il contient du 2,5-diméthylfuranne-3-carboxy-N-méthoxy-N-cyclohexylamide.

4. Agent protecteur du bois suivant la revendication 1, caractérisé en ce qu'il contient un produit d'addition d'un oxyde d'alcoylène et d'un alcoyl-phénol.

5. Procédé de préparation d'un agent protecteur du bois, caractérisé en ce que l'on mélange mutuellement de l'eau, une résine alkyd et une substance douée d'activité fongicide ou insecticide, à savoir le 2,5-diméthylfuranne-3-carboxy-N-méthoxy-N-cyclohexylamide, le benzoate de tributylétain, le naphténate de tributylétain, le gamme-hexachlorocyclohexane, le laurate de pentachloro-phénol, le 2-méthoxycarbonylaminobenzimidazole, ou un mélange de ces substances actives.

6. Procédé de protection du bois contre les attaques des champignons ou moisissures et des insectes, caractérisé en ce que l'on traite le bois par une solution aqueuse qui contient une résine alkyd et une substance douée d'activité fongicide ou insecticide, à savoir le 2,5-diméthylfuranne-3-carboxy-N-méthoxy-N-cyclohexylamide, le benzoate de tributylétain, le naphténate de tributylétain, le gamma-hexa-chlorocyclohexane, le laurate de pentachloro-phénol, le 2-méthoxycarbonylamino-benzimidazole, ou un mélange de ces substances actives.